# EUROPÄISCHE PATENTSCHRIFT

(11) **EP 2 125 649 B1**
(45) Veröffentlichungstag und Bekanntmachung des Hinweises auf die Patenterteilung: **30.11.2022**
(21) Anmeldenummer: 08716107.1
(22) Anmeldetag: 28.02.2008
(51) Int. Cl.: C03C 1/00, C03C 17/02, C09D 1/00, C23C 18/12, C03C 17/00, C09D 1/02, C09D 5/08

(54) **BESCHICHTUNGSZUSAMMENSETZUNG**
COATING COMPOSITION
COMPOSITION DE REVÊTEMENT

(30) Priorität: 05.03.2007 DE 102007010955
(43) Veröffentlichungstag der Anmeldung: 02.12.2009
(73) Patentinhaber: Leibniz-Institut für Neue Materialien gemeinnützige GmbH, 66123 Saarbrücken (DE)
(72) Erfinder: AMLUNG, Martin, 66132 Saarbrücken (DE); DE OLIVEIRA, Peter, William, 66123 Saarbrücken (DE); VEITH, Michael, 66386 St. Ingbert (DE)
(74) Vertreter: Patentanwälte Gierlich & Pischitzis Partnerschaft mbB
(86) Internationale Anmeldenummer: PCT/EP2008/001579
(87) Internationale Veröffentlichungsnummer: WO 2008/107113

(56) Entgegenhaltungen:
- EP-A- 1 284 307
- DE-A1- 10 326 815
- US-A- 4 469 721
- US-A- 4 921 731
- US-A1- 2004 258 611

## Beschreibung

### Gebiet der Erfindung

Die vorliegende Erfindung betrifft eine Beschichtungszusammensetzung mit antiadhäsiven bzw. tribologischen Eigenschaften, insbesondere zur Beschichtung von metallischen oder glasartigen Oberflächen.

### Stand der Technik

Die aus dem Stand der Technik bekannten Antihaftbeschichtungen lassen sich in zwei Gruppen einteilen.

Bei der ersten Gruppe handelt es sich um Doppelschichten, die meistens eine mechanisch und thermisch stabile Grundschicht umfassen. Diese Grundschicht kann beispielsweise aus Metalloxiden (z.B. WO 2005 044 749; EP 1 685 075) aufgebaut sein. Ferner sind anorganische Sol-Gel-Schichten als Grundschichten beschrieben (z.B. WO 2005 044 748, EP 1 656 329). Auf diese erste Schicht wird dann die eigentliche Antihaftschicht (üblicherweiweise mit Fluorsilanen) appliziert (z.B. WO 2005 044 748; EP1 656 329).

Die zweite Gruppe der aus dem Stand der Technik bekannten Antihaftbeschichtungen besteht aus nur einer Schicht, in der die Antihaft-Komponente direkt in eine Beschichtungsmatrix eingebaut wird. Dabei werden überwiegend Fluorsilane verwendet (z.B. WO 2005 080 465, WO 2002 094 729, WO 2004 106 252). Es werden aber auch Metalloxide (z.B. WO 2005 003 218) in einer Silan/Siloxan-Matrix oder oberflächenmodifizierte Feststoffteilchen aus Metalloxiden/Ruß eingesetzt (z.B. WO 2004 110 671) .

DE 103 26 815 A1 offenbart antiadhäsive Hochtemperaturschichten, welche Feststoffteilchen von einem Trennmittel und ein Bindemittel umfassend oberflächenmodifizierte Feststoffteilchen umfassen. Dazu wird ein Sol im sauren Milieu verwendet.

DE 19714949 A1 oder EP 1 284 307 A offenbaren glasartige Schichten auf metallischen Oberflächen, allerdings nicht für den Hochtemperaturbereich.

US 4 469 721 A offenbart eine Beschichtungszusammensetzung, die SiC, Graphit und Kalium-Silikat enthält, jedoch ebenfalls nicht für den Hochtemeperaturbereich.

Weitere Methoden sind das Sintern von Pulvern mit entsprechenden Eigenschaften (z.B. WO 2002 086 194) oder aufwändige Plasmaapplikationen von Antihaftschichten (z.B. WO 2003 002 269).

Die aus dem Stand der Technik bekannten Beschichtungen mit antiadhäsiven bzw. tribologischen Eigenschaften zeigen gravierende Nachteile. So ist die unzureichende Temperaturstabilität der bislang verwendeten Beschichtungen jenseits von etwa 350 ° C ein erheblicher Schwachpunkt der bekannten Beschichtungen. Ferner zeigen die Beschichtungen aus dem Stand der Technik eine niedrige Verschleißfestigkeit, insbesondere von organischen Komponenten.

Die oben genannten Applikationsverfahren aus dem Stand der Technik sind zudem meist aufwändig in der Durchführung (insbesondere bei Doppelschichten, Plasmaverfahren oder Sintern). Auch die Antihaftwirkung bzw. die tribologische Wirkung der bislang verwendeten Materialien lässt häufig noch zu wünschen übrig.

Als weiterer Nachteil der Beschichtungen aus dem Stand der Technik ist der Zusatz aufwändig herzustellender, oberflächenmodifizierter Feststoffteilchen, kombiniert mit einem pH-Wert des Sols im Sauren, der einen unzureichenden Korrosionsschutz durch fehlende Passivierung der Metalloberfläche bedeutet, zu nennen.

### Aufgabe

Der vorliegenden Erfindung liegt die Aufgabe zugrunde, die Nachteile des Standes der Technik zu überwinden. Ihr liegt insbesondere die Aufgabe zugrunde, eine Beschichtungszusammensetzung zur Verfügung zu stellen, mit der Beschichtungen mit erhöhter Temperaturbeständigkeit und verbesserter Antihaftwirkung (vorzugsweise mit integrierter Tribologie) zur Verfügung zu stellen.

### Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindung umfasst auch alle sinnvollen und insbesondere alle erwähnten Kombinationen von unabhängigen und/oder abhängigen Ansprüchen.

Die erfindungsgemäße Beschichtungszusammensetzung ist in Anspruch 1 definiert.

Mit der erfindungsgemäßen Beschichtungszusammensetzung können Beschichtungen mit einer Temperaturstabilität bis 800° C erhalten werden. Gleichzeitig bleibt der Korrosionsschutz nach DIN 50021 SS der Basismatrix (Silikat) weiterhin unvermindert bestehen. Ferner werden mit der erfindungsgemäßen Beschichtungszusammensetzung Kontaktwinkel gegen Wasser von über 90° erzielt.

Einer der Hauptvorteile der erfindungsgemäßen Beschichtungszusammensetzung besteht daher in der Kombination eines Hochtemperatur- Korrosions - Verschleißschutzes in Verbindung mit antiadhäsiven bzw. tribologischen Eigenschaften bis 800 ° C. Des weiteren kann durch die Wahl des Graphitgehalts die elektrische Leitfähigkeit der Beschichtung in gewissen Grenzen gezielt eingestellt werden.

Als erfindungsgemäß zu beschichtende metallische Oberfläche eignen sich alle aus einem glasartigen Material oder einem Metall oder einer Metalllegierung bestehenden bzw. dieses oder diese umfassenden Oberflächen von Halberzeugnissen und Fertigprodukten. Als Beispiele für Oberflächen aus Metall können solche aus Aluminium, Zinn, Zink, Kupfer, Chrom oder Nickel, einschließlich verzinkter, verchromter oder emaillierter Oberflächen, genannt werden, Beispiele für Metalllegierungen sind insbesondere Stahl bzw. Edelstahl, Aluminium-, Magnesium- und Kupferlegierungen, wie Messing und Bronze. Besonders bevorzugt werden metallische Oberflächen aus Stahl, Edelstahl, verzinktem, verchromtem oder emailliertem Stahl verwendet.

Vorzugsweise wird die metallische Oberfläche vor dem Auftrag der Beschichtungszusammensetzung gründlich gereinigt und insbesondere von Fett und Staub befreit. Vor der Beschichtung kann auch eine Oberflächenbehandlung, z.B. durch Corona-Entladung, durchgeführt werden.

Die metallische Oberfläche bzw. das metallische Substrat kann eine ebene oder eine strukturierte Oberfläche aufweisen. Bevorzugt weist die metallische Oberfläche eine strukturierte Oberfläche auf. Es kann sich um eine mikrostrukturierte Oberfläche oder um eine Struktur größerer Dimensionen handeln. Die Struktur kann regelmäßig sein, wie sie z.B. durch Prägen erhalten wird, oder unregelmäßig sein, wie sie z.B. durch Aufrauen erhalten wird.

Die strukturierte metallische Oberfläche kann durch Behandlung von normalen metallischen Substraten mit innerhalb der Fehlergrenzen ebenen Oberflächen erhalten werden. Die Strukturierung der metallischen Oberflächen kann z.B. durch Aufrauen, Ätzen, Bestrahlen mit Laserlicht (Lasern) oder Prägen erfolgen. Eine Aufrauung der metallischen Oberfläche ist z.B. durch Sandstrahlen, Glasperlenstrahlen oder Bürsten möglich. Die Verfahren zur Strukturierung metallischer Oberflächen sind dem Fachmann bekannt. Durch die Strukturierung können z.B. dekorative Effekte erzielt werden.

Die Erfindung eignet sich insbesondere für die Herstellung glasartiger Oberflächenschichten auf Bauwerken und Teilen davon; Fortbewegungs- und Transportmitteln und Teilen davon; Arbeitsgerätschaften, Vorrichtungen und Maschinen für gewerbliche bzw. industrielle Zwecke und Forschung sowie Teilen davon; Haushaltsgegenständen und Arbeitsgerätschaften für den Haushalt sowie Teilen davon; Ausrüstung, Geräten und Hilfsmitteln für Spiel, Sport und Freizeit und Teilen davon; sowie Geräten, Hilfsmitteln und Vorrichtungen für medizinische Zwecke und Kranke.

Konkrete Beispiele für derartige beschichtungsfähige Materialien bzw. Gegenstände als Substrat werden im Folgenden angegeben. Bevorzugt handelt es sich bei den beschichteten Oberflächen um Oberflächen aus Stahl oder Edelstahl.

Bauwerke (insbesondere Gebäude) und Teile davon:
Innen- und Außenfassaden von Gebäuden, Fußböden und Treppen, Fahrtreppen, Aufzüge, z.B. deren Wände, Treppengeländer, Möbel, Verkleidungen, Beschläge, Türen, Griffe (insbesondere mit Anti-Finger-print-Ausrüstungen, z.B. Türgriffe), Fassadenbleche, Bodenbeläge, Fenster (insbesondere Fensterrahmen, Fensterbänke und Fenstergriffe), Jalousien, Armaturen in Küche, Bad und WC, Duschkabinen, Sanitärzellen, WC-Kabinen, allgemein Gegenstände im Sanitärbereich (z.B. Toiletten, Waschbecken, Armaturen, Accessoires), Rohre (und insbesondere Abflussrohre), Heizkörper, Lichtschalter, Lampen, Beleuchtung, Briefkästen, Geldautomaten, Infoterminals, seewasserfeste Beschichtung für die Ausrüstung von Hafenanlagen, Dachrinnen, Regenrinnen, Antennen, Satellitenschüsseln, Handläufe von Geländern und Rolltreppen, Öfen, Windkraftanlagen, insbesondere Rotorblätter, Denkmäler, Skulpturen und allgemein Kunstwerke mit metallischen Oberflächen, insbesondere solche, die im Freien aufgestellt sind.

Fortbewegungs- und Transportmittel (z.B. Pkw, Lkw, Omnibus, Motorrad, Moped, Fahrrad, Eisenbahn, Straßenbahn, Schiff und Flugzeug) und Teile davon:
Schutzbleche von Fahrrädern und Motorrädern, Instrumente von Motorrädern, Türgriffe, Lenkräder, Reifenfelgen, Auspuffanlagen bzw. -rohre, temperaturbelastete Teile (Motorteile, Verkleidungen, Ventile und Ventildeckel), Beschläge, Latentwärmetauscher, Kühler, Teile der Innenausstattung mit metallischer Oberfläche (z.B. als Kratzfestbeschichtung), Tankstutzen, Gepäckträger, Dachcontainer für Pkws, Anzeigeinstrumente, Tankwagen, z.B. für Milch, Öl oder Säure, und allgemein sämtliche Karosserieteile sowie seewasserfeste Beschichtung für die Ausrüstung von Schiffen und Booten.

Arbeitsgerätschaften, Vorrichtungen und Maschinen (z.B. aus dem Anlagenbau (chemische Industrie, Lebensmittelindustrie, Kraftwerksanlagen) und der Energietechnik) für gewerbliche bzw. industrielle Zwecke und Forschung sowie Teile davon: Wärmetauscher, Verdichterräder, Spaltwendeltauscher, Cu-Elemente zur industriellen Heizung, Formen (z.B. Gießformen, insbesondere aus Metall), Schüttrichter, Einfüllanlagen, Extruder, Wasserräder, Walzen, Transportbänder, Druckmaschinen, Siebdruckschablonen, Abfüllmaschinen, (Maschinen-) Gehäuse, Bohrköpfe, Turbinen, Rohre (innen und außen, insbesondere für Flüssigkeits- und Gastransport), Rührer, Rührkessel, Ultraschallbäder, Reinigungsbäder, Behälter, Transporteinrichtungen in Öfen, Innenauskleidung von Öfen zum Hochtemperatur-, Oxidations-, Korrosions- und Säureschutz, Gasflaschen, Pumpen, Reaktoren, Bioreaktoren, Kessel (z.B. Brennstoffkessel), Wärmetauscher (z.B. in der Lebensmittelprozesstechnik oder für (Biomasse)Festbrennstoffkessel), Abluftanlagen, Sägeblätter, Abdeckungen (z.B. für Waagen), Tastaturen, Schalter, Knöpfe, Kugellager, Wellen, Schrauben, Solarzellen, Solaranlagen, Werkzeuge, Werkzeuggriffe, Flüssigkeitsbehälter, Isolatoren, Kapillaren, Laboreinrichtungen (z.B. Chromatographiesäulen und Abzüge) und Teile von Elektroakkumulatoren und Batterien.

Haushaltsgegenstände und Arbeitsgerätschaften für den Haushalt sowie Teile davon:
Mülleimer, Geschirr (z.B. aus Edelstahl), Bestecke (z.B. Messer), Tabletts, Pfannen, Töpfe, Backformen, Kochutensilien (z.B. Raspeln, Knoblauchpressen sowie Halterungen), Aufhängevorrichtungen, Kühlschränke, Kochfeldrahmen, Kochmulden, Heizplatten, Warmhalteflächen, Backöfen (innen und außen), Eierkocher, Mikrowellengeräte, Wasserkocher, Grillroste, Dampfgare, Öfen, Arbeitsflächen, Armaturen im Küchenbereich, Dunstabzugshauben, Blumenvasen, Gehäuse von TV-Geräten und Stereo-Anlagen, Gehäuse von (elektrischen) Haushaltsgeräten, Blumenvasen, Christbaumkugeln, Möbel, Möbelfronten aus Edelstahl, Spülen, Lampen und Leuchten.

Ausrüstung, Geräte und Hilfsmittel für Spiel, Sport und Freizeit:
Gartenmöbel, Gartengeräte, Werkzeuge, Spielplatzgeräte (z.B. Rutschen), Snowboards, Roller, Golfschläger, Hanteln, Gewichte, Trainingsgeräte, Beschläge, Sitzgelegenheiten in Parks, Spielplätzen, Einrichtungsgegenstände und Geräte in Schwimmbädern usw.

Geräte, Hilfsmittel und Vorrichtungen für medizinische Zwecke und Kranke:
Chirurgische Instrumente, Kanülen, medizinische Behälter, Spritzen, Implantate, zahnmedizinische Geräte, Zahnspangen, Brillengestelle, medizinische Bestecke (für Operationen und Zahnbehandlungen), Spiegel aus Metall (z.B. Edelstahl) als medizinische Spiegel, allgemein Gegenstände aus dem Bereich der Medizintechnik (z.B. Rohre, Apparate, Behälter) und Rollstühle, sowie ganz allgemein Krankenhauseinrichtungen zwecks Verbesserung der Hygiene.

Gegenstände, die eine elektrische Isolierung benötigen, z.B. Solarzellen und Kondensatoren. Die erfindungsgemäße Zusammensetzung kann hier als elektrisches Isoliermaterial in Form von Isolierschichten dienen.

Neben den obigen Gegenständen können natürlich auch andere Gegenstände und Teile davon vorteilhaft mit den obigen Oberflächenschichten versehen werden, wie z.B. Spielzeuge, Schmuck, Münzen, Spiegel aus Metall (z.B. Edelstahl) als Kosmetikspiegel oder Verkehrsspiegel, Urnen, Schilder (z.B. Verkehrsschilder), Ampelanlagen, Postkästen, Telefonhäuschen, Wartehäuschen für öffentliche Verkehrsmittel, Schutzbrillen, Schutzhelme, Raketen, allgemein alle Gegenstände aus Stahlblech, Uhrengehäuse, Uhrenarmbänder, Zifferblätter, Schreibgeräte aus Metall, insbesondere Edelstahl, Anzeigeinstrumente (Manometer, Thermometer) und elektrische und elektronische Schaltungen und Bauteile (z.B. integrierte Schaltungen oder Platinen und Teile davon).

Besondere Vorteile werden erfindungsgemäß bei der Beschichtung von metallischen Halbzeugen oder Fertigprodukten erzielt, die anschließend kaltverformt werden.

Im Folgenden werden einzelne Verfahrensschritte sowie die Beschichtungszusammensetzung und deren Komponenten näher beschrieben. Die Schritte müssen nicht notwendigerweise in der angegebenen Reihenfolge durchgeführt werden, und das zu schildernde Verfahren kann auch weitere, nicht genannte Schritte aufweisen.

Das Silikat ist erhältlich durch ein Verfahren, umfassend die Hydrolyse und Polykondensation eines oder mehrerer Silane der allgemeinen Formel (I)

RₙSiX₄₋ₙ (I)

worin die Gruppen X, gleich oder verschieden voneinander, hydrolysierbare Gruppen oder Hydroxylgruppen sind, die Reste R, gleich oder verschieden voneinander, für Wasserstoff, Alkyl-, Alkenyl- und Alkinylgruppen mit bis zu 4 Kohlenstoffatomen und Aryl-, Aralkyl- und Alkarylgruppen mit 6 bis 10 Kohlenstoffatomen stehen und n 0, 1 oder 2 bedeutet, mit der Maßgabe, dass mindestens ein Silan mit n = 1 oder 2 verwendet wird, oder davon abgeleiteter Oligomere,
in Anwesenheit von
   a) mindestens einer Verbindung aus der Gruppe der Oxide und Hydroxide der Alkali- und Erdalkalimetalle und gegebenenfalls
   b) zugesetzten nanoskaligen SiO2-Teilchen.

Damit können glasartige Schichten auf metallischen Oberflächen erhalten werden, deren Dicke z.B. bis zu 10 µm betragen kann, ohne dass bei der Trocknung und beim Verdichten Rissbildung auftritt. Die aufgetragenen Beschichtungszusammensetzungen können zum Beispiel auf Edelstahl- oder Stahloberflächen schon bei relativ niedrigen Temperaturen (in der Regel ab 400° C) in dichte SiO₂-Filme umgewandelt werden. Die erfindungsgemäß hergestellten Schichten haben in der Regel eine Dicke von 1 bis 6 µm, vorzugsweise 1,5 bis 5 µm und insbesondere 2,5 bis 4,5 µm. Sie bilden eine hermetisch abschließende Schicht, die auch bei höheren Temperaturen den Sauerstoffzutritt an die metallische Oberfläche verhindert bzw. drastisch reduziert und einen hervorragenden Korrosionsschutz gewährleistet. Die erhaltenen Schichten sind abriebfest und flexibel, so dass Biegungen oder Abknickungen der Oberfläche zu keinerlei Rissen oder Beeinträchtigungen der Schicht führen.

Unter den obigen Silanen der allgemeinen Formel (I) befindet sich mindestens ein Silan, in dessen allgemeiner Formel n den Wert 1 oder 2 aufweist.

In der Regel werden mindestens zwei Silane der allgemeinen Formel (I) in Kombination eingesetzt.

In der allgemeinen Formel (I) sind die Gruppen X, die gleich oder verschieden voneinander sind, hydrolysierbare Gruppen oder Hydroxylgruppen. Konkrete Beispiele für hydrolysierbare Gruppen X sind Halogenatome (insbesondere Chlor und Brom), Alkoxygruppen und Acyloxygruppen mit bis zu 6 Kohlenstoffatomen. Besonders bevorzugt werden Alkoxygruppen, insbesondere C ₁₋₄-Alkoxygruppen wie Methoxy, Ethoxy, n-Propoxy und i-Propoxy. Vorzugsweise sind die Gruppen X in einem Silan identisch, wobei besonders bevorzugt Methoxy- oder Ethoxygruppen eingesetzt werden.

Bei den Gruppen R in der allgemeinen Formel (I), die im Falle von n = 2 gleich oder identisch sein können, handelt es sich um Wasserstoff, Alkyl-, Alkenyl- und Alkinylgruppen mit bis zu 4 Kohlenstoffatomen und Aryl-, Aralkyl- und Alkarylgruppen mit 6 bis 10 Kohlenstoffatomen. Konkrete Beispiele für derartige Gruppen sind Methyl, Ethyl, n-Propyl, i-Propyl, n-Butyl, sek.-Butyl und tert.-Butyl, Vinyl, Allyl und Propargyl, Phenyl, Tolyl und Benzyl. Die Gruppen können übliche Substituenten aufweisen, vorzugsweise tragen derartige Gruppen aber keinen Substituenten. Bevorzugte Gruppen R sind Alkylgruppen mit 1 bis 4 Kohlenstoffatomen, insbesondere Methyl und Ethyl, sowie Phenyl.

Erfindungsgemäß bevorzugt ist es, wenn mindestens zwei Silane der allgemeinen Formel (I) eingesetzt werden, wobei in einem Fall n = O und im anderen Fall n = 1 ist. Derartige Silan-Mischungen umfassen zum Beispiel mindestens ein Alkyltrialkoxysilan (z.B. (M)ethyltri(m)ethoxysilan) und ein Tetraalkoxysilan (z.B. Tetra(m)ethoxysilan), die vorzugsweise in einem solchen Verhältnis eingesetzt werden, dass der Durchschnittswert von n in den oben angegebenen bevorzugten Bereichen liegt. Eine besonders bevorzugte Kombination für die Ausgangssilane der Formel (I) ist Methyltri(m)ethoxysilan und Tetra(m)ethoxysilan.

Die Hydrolyse und Polykondensation des oder der Silane der allgemeinen Formel (I) wird in Anwesenheit mindestens einer Verbindung aus der Gruppe der Oxide und Hydroxide der Alkali- und Erdalkalimetalle durchgeführt. Bei diesen Oxiden und Hydroxiden handelt es sich um solche von Li, Na, K, Mg, Ca und/oder Ba. Vorzugsweise werden Alkalimetalle, insbesondere Na und/oder K verwendet. Bei der Verwendung eines Alkalimetalloxids bzw. - hydroxids wird dieses in einer solchen Menge eingesetzt, dass das Atomverhältnis Si : Alkalimetall im Bereich von 20 :1 bis 7:1, insbesondere von 15:1 bis 10:1, liegt. In jedem Fall wird das Atomverhältnis von Silizium zu (Erd)alkalimetall so (groß) gewählt, dass der resultierende Überzug nicht wasserlöslich ist (wie beispielsweise im Falle von Wasserglas).

Vorzugsweise beträgt der Durchschnittswert von n in den Ausgangssilanen der allgemeinen Formel (I) 0,2 bis 1,5, insbesondere 0,5 bis 1,0.

Die gegebenenfalls zusätzlich zu den hydrolysierbaren Silanen der allgemeinen Formel (I) verwendeten nanoskaligen SiO₂-Teilchen werden vorzugsweise in einer solchen Menge eingesetzt, dass das Verhältnis aller Si-Atome in den Silanen der allgemeinen Formel (I) zu allen Si-Atomen in den nanoskaligen SiO₂-Teilchen im Bereich von 5:1 bis 1:2, insbesondere 3:1 bis 1:1, liegt.

Unter nanoskaligen SiO₂-Teilchen werden SiO₂-Teilchen mit einer durchschnittlichen Teilchengröße (bzw. einem durchschnittlichen Teilchendurchmesser) von vorzugsweise nicht mehr als 100 nm, bevorzugter nicht mehr als 50 nm und insbesondere nicht mehr als 30 nm verstanden. Hierfür können z.B. auch handelsübliche Kieselsäureprodukte, z.B. Kieselsole, wie die Levasile^{®}, Kieselsole der Bayer AG, oder pyrogene Kieselsäuren, z.B. die Aerosil-Produkte von Degussa, verwendet werden. Die teilchenförmigen Materialien können in Form von Pulvern und Solen zugesetzt werden. Sie können aber auch *in situ* bei der Hydrolyse und Polykondensation der Silane gebildet werden.

Die Hydrolyse und Polykondensation der Silane können in Abwesenheit oder Anwesenheit eines organischen Lösungsmittels durchgeführt werden. Vorzugsweise ist kein organisches Lösungsmittel vorhanden. Bei Einsatz eines organischen Lösungsmittels sind die Ausgangskomponenten vorzugsweise im Reaktionsmedium (das in der Regel Wasser einschließt) löslich. Als organische Lösungsmittel eignen sich insbesondere mit Wasser mischbare Lösungsmittel wie beispielsweise ein- oder mehrwertige aliphatische Alkohole (wie beispielsweise Methanol, Ethanol), Ether (wie beispielsweise Diether), Ester (wie beispielsweise Ethylacetat), Ketone, Amide, Sulfoxide und Sulfone. Im übrigen können die Hydrolyse und Polykondensation gemäß den dem Fachmann geläufigen Modalitäten durchgeführt werden.

Bei einer besonders bevorzugten Ausführungsform der erfindungsgemäßen Beschichtungszusammensetzung ist die Komponente mit Antihafteigenschaften Graphit und das Metallcarbid Siliciumcarbid. Insbesondere bei dieser Kombination konnten besonders hervorragende Ergebnisse erzielt werden (siehe Beispiele).

Bevorzugt ist die Beschichtungszusammensetzung ein härtbares Beschichtungssol. Dies hat insbesondere Vorteile bei der Verarbeitung der erfindungsgemäßen Beschichtungszusammensetzung, indem diese in einfacher Art und Weise auf zu beschichtende Oberflächen aufgebracht und ausgehärtet werden kann.

Die erfindungsgemäß eingesetzte Beschichtungszusammensetzung kann in der Lackierungsindustrie übliche Additive enthalten, z.B. die Rheologie und das Trocknungsverhalten kontrollierende Additive, Benetzungs- und Verlaufshilfsmittel, Entschäumer, Lösungsmittel, Farbstoffe und Pigmente. Als Lösungsmittel eignen sich z.B. Alkohole und/oder Glycole, beispielsweise ein Gemisch aus Ethanol, Isopropanol und Butylglycol. Ferner können handelsübliche Mattierungsmittel, z.B. mikroskalige SiO₂- oder keramische Pulver zugesetzt werden, um mattierte Schichten mit Anti-Fingerprint-Eigenschaften zu erreichen. Sofern eingesetzt, können die Hydrolyse und Polykondensation der Silane in Anwesenheit von Mattierungsmitteln, z.B. mikroskaligen SiO₂ -oder keramischen Pulvern erfolgen. Diese können aber auch später zur Beschichtungszusammensetzung zugegeben werden.

Die erfindungsgemäß eingesetzte Beschichtungszusammensetzung kann nach üblichen Beschichtungsmethoden auf die metallische Oberfläche aufgebracht werden. Anwendbare Techniken sind zum Beispiel das Tauchen, Gießen, Fluten, Schleudern, Sprühen, Aufstreichen oder der Siebdruck. Besonders bevorzugt werden automatisierte Beschichtungsverfahren wie Flachspritzen, Einsatz von Sprührobotern und automatisches Sprühen mit maschinell geführten rotierenden oder schwenkenden Substraten. Dabei können zum Verdünnen übliche Lösungsmittel, wie sie in der Lackierungsindustrie gebräuchlich sind, verwendet werden.

Die auf die metallische Oberfläche aufgetragene Beschichtungszusammensetzung wird normalerweise bei Raumtemperatur bzw. leicht erhöhter Temperatur (beispielsweise einer Temperatur von bis zu 100° C, insbesondere bis zu 80° C), getrocknet, bevor sie thermisch zu einer glasartigen Schicht verdichtet wird. Die thermische Verdichtung kann gegebenenfalls auch durch IR- oder Laser-Strahlung erfolgen.

Falls gewünscht kann auf die so hergestellte Schicht (mindestens) eine weitere (ggf. glasartige) Schicht aufgebracht werden, zum Beispiel eine funktionelle glasartige Schicht, wie sie in der internationalen Patentanmeldung PCT/EP94/03423 (entsprechend EP-A-729442) oder in der DE-A-19645043 beschrieben ist. Bei dieser funktionellen glasartigen Schicht kann es sich z.B. um eine farbige Schicht handeln. Da derartige gefärbte glasartige Schichten mit Hilfe einer Beschichtungszusammensetzung hergestellt werden, die zum Beispiel Precursoren für Metallkolloide enthalten, lässt sich dadurch auch verhindern, dass die metallische Oberfläche die Reaktionen der Metallkolloid-Precursoren etc. beeinträchtigt bzw. beeinflusst, da kein direkter Kontakt zwischen der metallischen Oberfläche und der gefärbten glasartigen Schicht vorliegt. Eine derartige gefärbte glasartige Schicht kann auf der erfindungsgemäß hergestellten glasartigen Schicht dadurch vorgesehen werden, dass man den erfindungsgemäß auf der metallischen Oberfläche vorgesehenen Überzug vor seiner thermischen Verdichtung (und vorzugsweise nach seiner Trocknung bei Raumtemperatur oder erhöhter Temperatur) mit der Beschichtungszusammensetzung für die gefärbt glasartige Schicht versieht und die beiden Überzüge dann gemeinsam thermisch verdichtet.

Die vorliegende Erfindung betrifft ferner ein Verfahren zur Beschichtung von metallischen oder glasartigen Oberflächen mit einer glasartigen Schicht, welches dadurch gekennzeichnet ist, dass man eine Beschichtungszusammensetzung, die mindestens ein Silikat, mindestens eine Komponente mit Antihafteigenschaften, ausgewählt aus der Gruppe von Graphit, Graphitverbindungen und Metallsulfiden, und mindestens ein Metallcarbid, enthält, auf die metallische oder glasartige Oberfläche aufbringt und die resultierende Beschichtung thermisch zu einer glasartigen Schicht verdichtet.

Das Silikat für das erfindungsgemäße Verfahren ist erhältlich durch ein Verfahren, umfassend die Hydrolyse und Polykondensation eines oder mehrerer Silane der allgemeinen Formel (I)

RₙSiX₄₋ₙ

worin die Gruppe X, gleich oder verschieden voneinander, hydrolysierbare Gruppen oder Hydroxylgruppen sind, die Reste R, gleich oder verschieden voneinander, für Wasserstoff, Alkyl-, Alkenyl-, und Alkinylgruppen mit bis zu 12 Kohlenstoffatomen und Aryl-, Aralkyl- und Alkarylgruppen mit 6 bis 10 Kohlenstoffatomen stehen und n 0, 1 oder 2 bedeutet, mit der Maßgabe, dass mindestens ein Silan mit n = 1 oder 2 verwendet wird, oder davon abgeleiteter Oligomere, in Anwesenheit von
a) mindestens einer Verbindung aus der Gruppe der Oxide und Hydroxide der Alkali- und Erdalkalimetalle und gegebenenfalls
b) zugesetzten nanoskaligen SiO₂-Teilchen.

Die Verbindung aus der Gruppe der Oxide und Hydroxide der Alkali- und Erdalkalimetalle umfasst mindestens ein Oxid bzw. Hydroxid von Li, Na, K, Mg, Ca und/oder Ba.

Mit Vorteil wird die Verbindung aus Natriumhydroxid und Kaliumhydroxid ausgewählt.

Erfindungsgemäß wird das Alkali- oder Erdalkalimetalloxid bzw. -hydroxid in einer solchen Menge eingesetzt, dass das Atomverhältnis Si : Alkali- oder Erdalkalimetall im Bereich von 20:1 bis 7:1, insbesondere 15:1 bis 10:1, liegt.

Vorzugsweise beträgt der Durchschnittswert von n in den Ausgangssilanen der allgemeinen Formel (I) 0,2 bis 1,5, insbesondere 0,5 bis 1,0.

Bei einer bevorzugten Verfahrensvariante steht in den Ausgangssilanen der allgemeinen Formel (I) X für Alkoxy, insbesondere C₁₋₄-Alkoxy.

Bei einer bevorzugten Verfahrensvariante steht X für Methoxy oder Ethoxy.

Bei einer bevorzugten Verfahrensvariante steht R für C₁₋₄ Alkyl, insbesondere Methyl, Ethyl oder Phenyl.

Mit Vorteil werden als Ausgangssilane der allgemeinen Formel (I) (M)ethyltri(m)ethoxysilan und Tetra(m)ethoxysilan in Kombination eingesetzt.

Vorzugsweise weist mindestens eines der eingesetzten Ausgangssilane der allgemeinen Formel (I) einen fluorierten Rest R auf.

Bei einer besonders bevorzugten Verfahrensvariante ist die Komponente mit Antihafteigenschaften Graphit und das Metallcarbid Siliciumcarbid.

Die vorliegende Erfindung betrifft ferner ein Sol-Gel-Verfahren zur Beschichtung von, insbesondere metallischen oder glasartigen, Oberflächen, welches dadurch gekennzeichnet ist, dass man eine Beschichtungszusammensetzung nach einem der Ansprüche 1 bis 8 auf die Oberfläche nasschemisch appliziert und verdichtet.

Die vorliegende Erfindung betrifft ferner einen Gegenstand aus Metall und/oder Glas, welcher dadurch gekennzeichnet ist, dass er eine Beschichtung aus einer erfindungsgemäßen Beschichtungszusammensetzung aufweist.

Die vorliegende Erfindung betrifft ferner eine Verwendung einer erfindungsgemäßen Beschichtungszusammensetzung zur Beschichtung von Metall- oder Glassubstraten.

Bei der erfindungsgemäßen Verwendung enthält die Beschichtungszusammensetzung vorzugsweise zusätzlich mikroskaliges SiO₂- oder Keramikpulver als Mattierungszusatz.

Mit Vorteil wird die erfindungsgemäße Beschichtungszusammensetzung als glättende Beschichtung einer strukturierten metallischen oder glasartigen Oberfläche verwendet.

Mit Vorteil wird die erfindungsgemäße Beschichtungszusammensetzung als optisch neutrale Beschichtung einer metallischen oder glasartigen Oberfläche verwendet.

Mit Vorteil wird die erfindungsgemäße Beschichtungszusammensetzung als Schmutz-abweisende, reibungsmindernde, kratzfeste und/oder abriebfeste Beschichtung (Antihaft- und tribologische Wirkung) verwendet.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

### Ausführungsbeispiele:

### Beispiel 1

### Herstellung eines Beschichtungssols

Unter Rühren werden 10 g (250 mMol) Siliciumcarbid, 2.4 g (60 mMol) Natriumhydroxid und 5 g (417 mMol) Graphit zu einer Mischung von 67 g (375 mMol) Methyltriethoxysilan und 20 g (96 mMol) Tetraethoxysilan gegeben. Nach Auflösen des Natriumhydroxids wird das Gesamtsystem tropfenweise unter Rühren mit 10 g (556 mMol) Wasser hydrolysiert.

### Beispiel 2

### Herstellung eines Beschichtungssols

Beispiel 1 wird mit 3.36 g (60 mMol) Kaliumhydroxid (oder entsprechend 60 mMol eines anderen Alkali- oder Erdalkalimetallhydroxids bzw. Bor-/Aluminium-alkoholats; auch Mischungen) durchgeführt.

### Beispiel 3

### Herstellung einer Hochtemperatur-Antihaftschicht mit tribologischen Eigenschaften

Gereinigte Metalle und Gläser werden mit den beschriebenen Solen beschichtet (üblicherweise Tauchen oder Sprühen) und bei 80 °C getrocknet. Anschließend werden die Schichten unter Schutzgas (Stickstoff, Argon) bei bis zu 1000 °C (vorzugsweise 600 °C - 800 °C) verdichtet. Hierzu wird der mit den beschichteten Substraten bestückte Ofen aufgeheizt und bei der gewünschten Endtemperatur 1 h belassen.

Nach Abkühlung im Ofen erhält man 2 µm bis 10 µm (je nach Nassfilmstärke) dicke Schichten, die aufgrund der glasartigen Matrix einen hervorragenden Korrosions- und Verschleißschutz aufweisen und zusätzlich auch bei hohen Temperaturen (bis 1000 °C, vorzugsweise 600 °C bis 800 °C) antiadhäsive bzw. tribologische Eigenschaften besitzen.

Es zeigte sich, dass Temperaturstabilität bis mindestens 800 °C gegeben ist, der Korrosionsschutz nach DIN 50021 SS der Basismatrix weiterhin unvermindert besteht, Kontaktwinkel gegen Wasser von über 90 ° erzielt wurden und zusätzlich durch den Einbau von z. B. Siliciumcarbid Gleiteigenschaften inkorporiert wurden.

Der Vorteil der Erfindung ist daher u.a. die Kombination von Hochtemperatur-Korrosions- und Verschleißschutz mit antiadhäsiven bzw. tribologischen Eigenschaften.

Des weiteren kann durch die Wahl des Graphitgehalts die elektrische Leitfähigkeit der ansonsten isolierend wirkenden Beschichtung gezielt eingestellt werden.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: NaSi auf Stahl nach Verdichtung bei 600 °C (oben) und 800 °C (unten) unter Stickstoff;
- Fig. 2: SuSol auf Stahl nach Verdichtung bei 600 °C (oben) und 800 °C (unten) unter Stickstoff;
- Fig. 3: SuSol auf Glas nach Verdichtung bei 600 °C (oben) und 800 °C (unten) unter Stickstoff;
- Fig. 4: Balkendiagramm Verhältnis Kontaktwinkel versus Temperatur.

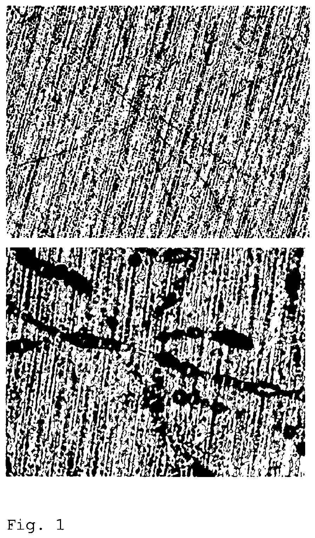

Im einzelnen wurden die lichtmikroskopisches Unterschiede SuSol ↔ NaSi untersucht. Es wurde eine herkömmliche NaSi-Schicht (DE 19714949 A1) auf Stahl (1.4301) lichtmikroskopisch untersucht. Die in den Figuren gezeigten Aufnahmen sind die Aufnahmen bei 5facher Vergrößerung am Objektiv abgebildet (s. Fig. 1).

Wie zu erkennen ist, zeigt Fig. 1 die NaSi-Matrix nach einer thermischen Behandlung von 600 °C und langsamem Abkühlen im Ofen ein Netzwerk von feinen Rissen, die nach einer Verdichtung bei 800 °C noch weit deutlicher zu erkennen sind (Rissverbreiterung, vermutlich durch Ausbrennen der Restorganik und fehlende Kompensation des Schrumpfes). Zusätzlich ist die Oberfläche fleckig, sehr spröde, abrasiv nicht mehr belastbar und durch fehlende Restorganik ohne Antihaft-Wirkung.

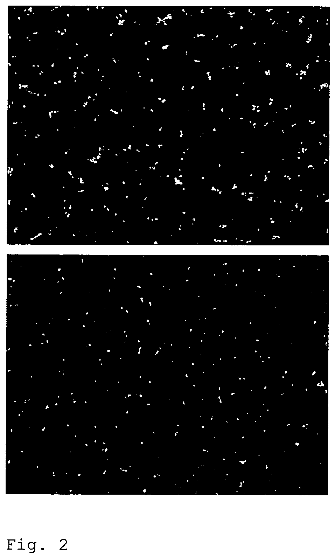

Zum Vergleich hierzu sind die entsprechenden Aufnahmen des SuSol auf Stahl bei gleichen Beschichtungs-, Verdichtungs- und Vergrößerungsparametern abgebildet (s. Fig. 2).

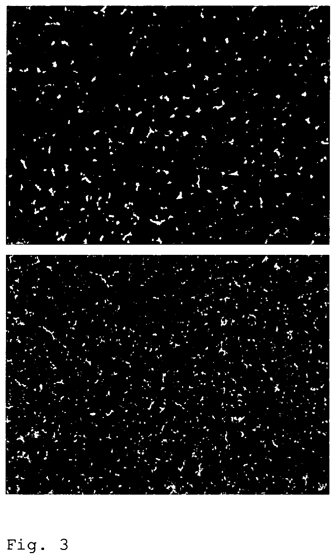

Man erkennt eine homogene amorphe Matrix, die im Gegensatz zum NaSi auch bei 800 °C völlig defektfrei ist. Dasselbe Erscheinungsbild ist auch bei Beschichtung von Glas mit SuSol zu beobachten (s. Fig. 3).

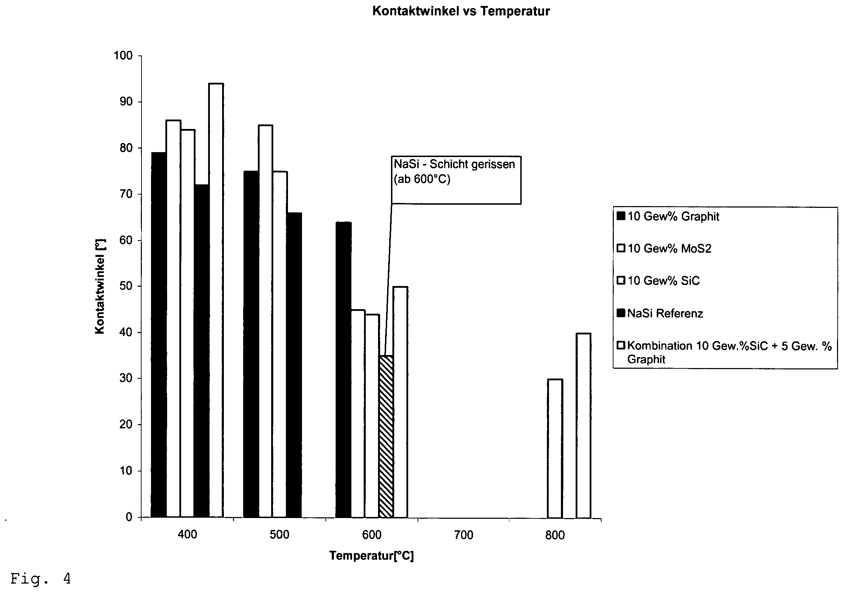

Fig. 4 gibt die Verhältnisse wieder, die beim Auftrag der Kontaktwinkeln versus der Temperatur für unterschiedliche Beschichtungszusammensetzungen gemessen wurden. Es zeigt sich, dass insbesondere die erfindungsgemäßen Beschichtungszusammensetzungen hier besonders gute Eigenschaften aufwiesen.

Zusammenfassend lässt sich sagen, dass durch den Einbau von Graphit und insbesondere SiC in das glasartige Netzwerk eine thermisch wesentlich stabilere Matrix synthetisiert wurde, die neben den hier dokumentierten Vorteilen auch zusätzlich die in der Patentanmeldung genannten Eigenschaften aufweist (Hochtemperatur-Korrosions- und Verschleißschutz mit antiadhäsiven bzw. tribologischen Eigenschaften), da bei Temperaturen von 600 °C und darüber die Matrix nicht zerstört wird.

Es sind zahlreiche Abwandlungen und Weiterbildungen der beschriebenen Ausführungsbeispiele verwirklichbar.

Die nachfolgenden Tabellen geben die Verhältnisse in ausgewählten Modelsystemen wieder:

**Tabelle 1: Kontaktwinkel und Widerstände der SuSol-Variationen (auf Edelstahl) (gerundete Mittelwerte aus 3 Einzelmessungen)**

| Temperatur, Atmosphäre | Partikel | Winkel H₂O | Widerst. [kΩ] | Bemerkungen |
|---|---|---|---|---|
| 400 °C, N₂ | 10 Gew.% Graphit | 79 ° | 2 | |
| | 5 Gew.% Graphit | 75 ° | 35 | |
| | 2 Gew.% Graphit | 72 ° | 15.000 | |
| 500 °C, N₂ | 10 Gew.% Graphit | 75 ° | 1,5 | |
| | 5 Gew.% Graphit | 73 ° | 25 | |
| | 2 Gew.% Graphit | 71 ° | 10.000 | |
| 600 °C, N₂ | 10 Gew.% Graphit | 64 ° | 0,6 | |
| | 5 Gew.% Graphit | 55 ° | 1,5 | |
| | 2 Gew.% Graphit | 46 ° | 12 | |
| 400 °C, N₂ | 10 Gew.% MoS₂ | 86 ° | > 20.000 | |
| | 5 Gew.% MoS₂ | 78 ° | > 20.000 | |
| | 2 Gew.% MoS₂ | 72 ° | > 20.000 | |
| 500 °C, N₂ | 10 Gew.% MoS₂ | 85 ° | > 20.000 | |
| | 5 Gew.% MoS₂ | 77 ° | > 20.000 | |
| | 2 Gew.% MoS₂ | 72 ° | > 20.000 | |
| 600 °C, N₂ | 10 Gew.% MoS₂ | 45 ° | 3.000 | |
| | 5 Gew.% MoS₂ | 41 ° | 7.000 | |
| | 2 Gew.% MoS₂ | 36 ° | 20.000 | |
| 400 °C, N₂ | 10 Gew.% SiC | 84 ° | > 20.000 | Rau |
| | 5 Gew.% SiC | 75 ° | > 20.000 | Rau |
| | 2 Gew.% SiC | 69 ° | > 20.000 | Rau |
| 500 °C, N₂ | 10 Gew.% SiC | 75 ° | > 20.000 | Rau |
| | 5 Gew.% SiC | 73 ° | > 20.000 | Rau |
| | 2 Gew.% SiC | 72 ° | > 20.000 | Rau |
| 600 °C, N₂ | 10 Gew.% SiC | 44 ° | > 20.000 | Rau |
| | 5 Gew.% SiC | 40 ° | > 20.000 | Rau |
| | 2 Gew.% SiC | 38 ° | > 20.000 | Rau |
| 400 °C, N₂ | | 72 ° | > 20.000 | |
| 500 °C, N₂ | | 66 ° | > 20.000 | |
| 600 °C, N₂ | | 35 ° | > 20.000 | |

**Tabelle 2: Kontaktwinkel und Widerstände der SuSol-Variationen (auf Edelstahl) (gerundete Mittelwerte aus 3 Einzelmessungen)**

| Temperatur, Atmosphäre | Partikel | Winkel H₂O | Widerst. [kΩ] | Bemerkungen |
|---|---|---|---|---|
| 400 °C, N₂ | 10 Gew.% SiC | 90 ° | > 20.000 | glatt |
| | 10 Gew.% SiC + 5 Gew.% Graphit | 94 ° | 200 | glatt, schwärzlich |
| 600 °C, N₂ | 10 Gew.% SiC | 45 ° | > 20.000 | glatt |
| | 10 Gew.% SiC + 5 Gew.% Graphit | 50 ° | 20 | glatt, schwärzlich |
| 800 °C, N₂ | 10 Gew.% SiC | < 30 ° | > 20.000 | glatt, schwärzlich |
| | 10 Gew.% SiC + 5 Gew.% Graphit | ≈ 40 ° | 0,1 | glatt, schwärzlich |

**Tabelle 3: Kontaktwinkel und Widerstände der SuSol-Variationen (auf Glas) (gerundete Mittelwerte aus 3 Einzelmessungen)**

| Temperatur, Atmosphäre | Partikel | Winkel H₂O | Widerst. [kΩ] | Bemerkungen |
|---|---|---|---|---|
| 600 °C, N₂ | 5 Gew.% Graphit | 55 ° | 7.000 | glatt, schwarz |
| | 10 Gew.% SiC + 5 Gew.% Graphit | 50 ° | > 20.000 | glatt, schwärzlich |
| 800 °C, N₂ | 5 Gew.% Graphit | ≈ 35 ° | 100 | glatt, schwarz |
| | 10 Gew.% SiC + 5 Gew.% Graphit | ≈ 40 ° | 150 | glatt, schwärzlich |
| 600 °C, N₂ | | 35 ° | > 20.000 | |

**Tabelle 4: Widerstände der SuSol-Variationen (4-Punkt-Messung) (gerundete Mittelwerte aus 3 Einzelmessungen)**

| Temperatur, Atmosphäre, Substrat | Partikel | Widerst. [kΩ] | Bemerkungen |
|---|---|---|---|
| 600 °C, N₂, Glas | 5 Gew.% Graphit | 5.000 | glatt, schwarz |
| | 10 Gew.% SiC + 5 Gew.% Graphit | > 10.000 | glatt, schwärzlich |
| 800 °C, N₂, Glas | 5 Gew.% Graphit | 50 | wellig, schwarz |
| | 10 Gew.% SiC + 5 Gew.% Graphit | 150 | wellig, schwärzlich |
| 600 °C, N₂, Edelstahl | 5 Gew.% Graphit | 0,00001 | glatt, schwarz |
| | 10 Gew.% SiC + 5 Gew.% Graphit | 0,00001 | glatt, schwärzlich |
| 800 °C, N₂, Edelstahl | 5 Gew.% Graphit | 0,000001 | glatt, schwarz |
| | 10 Gew.% SiC + 5 Gew.% Graphit | 0,000001 | glatt, schwärzlich |

| | | | |
|---|---|---|---|
| Model RT 70, Napson Corporation | | | |

## Patentansprüche

1. Beschichtungszusammensetzung, insbesondere zur Beschichtung von metallischen oder glasartigen Oberflächen, enthaltend mindestens ein Silikat, mindestens eine Komponente mit Antihafteigenschaften, ausgewählt aus der Gruppe von Graphit, Graphitverbindungen und Metallsulfiden, und mindestens ein Metallcarbid, wobei das Silikat erhältlich ist durch ein Verfahren, umfassend die Hydrolyse und Polykondensation eines oder mehrerer Silane der allgemeinen Formel (I)
RₙSiX₄₋ₙ
worin die Gruppe X, gleich oder verschieden voneinander, hydrolysierbare Gruppen oder Hydroxylgruppen sind, die Reste R, gleich oder verschieden voneinander, für Wasserstoff, Alkyl-, Alkenyl-, und Alkinylgruppen mit bis zu 12 Kohlenstoffatomen und Aryl-, Aralkyl- und Alkarylgruppen mit 6 bis 10 Kohlenstoffatomen stehen und n 0, 1 oder 2 bedeutet, mit der Maßgabe, dass mindestens ein Silan mit n = 1 oder 2 verwendet wird, oder davon abgeleiteter Oligomere, in Anwesenheit von
a) mindestens einer Verbindung aus der Gruppe der Oxide und Hydroxide der Alkali- und Erdalkalimetalle und gegebenenfalls
b) zugesetzten nanoskaligen SiO₂-Teilchen,
worin die mindestens eine Verbindung aus der Gruppe der Oxide und Hydroxide der Alkali- und Erdalkalimetalle mindestens ein Oxid bzw. Hydroxid von Li, Na, K, Mg, Ca und/oder Ba umfasst, worin das Alkali- oder Erdalkalimetalloxid bzw. -hydroxid in einer solchen Menge eingesetzt wird, dass das Atomverhältnis Si : Alkali- oder Erdalkalimetall im Bereich von 20:1 bis 7:1.

2. Beschichtungszusammensetzung nach Anspruch 1, **dadurch gekennzeichnet, dass** die Komponente mit Antihafteigenschaften Graphit ist und das Metallcarbid Siliciumcarbid ist.

3. Verfahren zur Beschichtung von metallischen oder glasartigen Oberflächen mit einer glasartigen Schicht, **dadurch gekennzeichnet, dass** man eine Beschichtungszusammensetzung, die mindestens ein Silikat, mindestens eine Komponente mit Antihafteigenschaften, ausgewählt aus der Gruppe von Graphit, Graphitverbindungen und Metallsulfiden, und mindestens ein Metallcarbid, enthält, auf die metallische oder glasartige Oberfläche aufbringt und die resultierende Beschichtung thermisch zu einer glasartigen Schicht verdichtet, wobei das Silikat erhältlich ist durch ein Verfahren, umfassend die Hydrolyse und Polykondensation eines oder mehrerer Silane der allgemeinen Formel (I)
RₙSiX₄₋ₙ
worin die Gruppe X, gleich oder verschieden voneinander, hydrolysierbare Gruppen oder Hydroxylgruppen sind, die Reste R, gleich oder verschieden voneinander, für Wasserstoff, Alkyl-, Alkenyl-, und Alkinylgruppen mit bis zu 12 Kohlenstoffatomen und Aryl-, Aralkyl- und Alkarylgruppen mit 6 bis 10 Kohlenstoffatomen stehen und n 0, 1 oder 2 bedeutet, mit der Maßgabe, dass mindestens ein Silan mit n = 1 oder 2 verwendet wird, oder davon abgeleiteter Oligomere, in Anwesenheit von
a) mindestens einer Verbindung aus der Gruppe der Oxide und Hydroxide der Alkali- und Erdalkalimetalle und gegebenenfalls
b) zugesetzten nanoskaligen SiO₂-Teilchen,
worin die mindestens eine Verbindung aus der Gruppe der Oxide und Hydroxide der Alkali- und Erdalkalimetalle mindestens ein Oxid bzw. Hydroxid von Li, Na, K, Mg, Ca und/oder Ba umfasst, worin das Alkali- oder Erdalkalimetalloxid bzw. -hydroxid in einer solchen Menge eingesetzt wird, dass das Atomverhältnis Si : Alkali- oder Erdalkalimetall im Bereich von 20:1 bis 7:1.

4. Verfahren nach Anspruch 3, **dadurch gekennzeichnet, dass** der Durchschnittswert von n in den Ausgangssilanen der allgemeinen Formel (I) 0,2 bis 1,5 beträgt.

5. Verfahren nach einem der Ansprüche 3 und 4, **dadurch gekennzeichnet, dass** in den Ausgangssilanen der allgemeinen Formel (I) X für Alkoxy steht.

6. Verfahren nach einem der Ansprüche 3 bis 5, **dadurch gekennzeichnet, dass** R für C₁₋₄ Alkyl steht.

7. Verfahren nach einem der Ansprüche 3 bis 6, **dadurch gekennzeichnet, dass** als Ausgangssilane der allgemeinen Formel (I) (M)ethyltri(m)ethoxysilan und Tetra(m)ethoxysilan in Kombination eingesetzt werden.

8. Verfahren nach einem der Ansprüche 3 bis 7, **dadurch gekennzeichnet, dass** die Komponente mit Antihafteigenschaften Graphit ist und das Metallcarbid Siliciumcarbid ist.

9. Gegenstand aus Metall und/oder Glas, **dadurch gekennzeichnet, dass** er eine Beschichtung aus einer Beschichtungszusammensetzung nach einem der Ansprüche 1 oder 2 aufweist.

10. Verwendung einer Beschichtungszusammensetzung nach einem der Ansprüche 1 oder 2 zur Beschichtung von Metall- oder Glassubstraten.

11. Verwendung nach Anspruch 10 als Schmutz-abweisende, reibungsmindernde, kratzfeste und/oder abriebfeste Beschichtung.

## Claims

1. Coating composition, particularly for coating metallic or vitreous surfaces, comprising at least one silicate, at least one component having anti-adhesive properties, selected from the group of graphite, graphite compounds and metal sulfides, and at least one metal carbide, wherein the silicate is obtainable by a process comprising the hydrolysis and polycondensation of one or more silanes of the general formula (I)
RₙSiX₄₋ₙ
where the groups X are the same or different hydrolysable groups or hydroxyl groups, the radicals R are the same or different from one another and are hydrogen, alkyl, alkenyl and alkynyl groups having up to 12 carbon atoms and aryl, aralkyl and alkaryl groups having 6 to 10 carbon atoms and n is 0, 1 or 2, with the proviso that at least one silane where n = 1 or 2 is used, or oligomers derived therefrom, in the presence of
a) at least one compound from the group of the oxides and hydroxides of the alkali metals and alkaline earth metals and optionally
b) added nanoscale SiO₂ particles,
in which the at least one compound from the group of the oxides and hydroxides of the alkali metals and alkaline earth metals comprises at least one oxide or hydroxide of Li, Na, K, Mg, Ca and/or Ba,
in which the alkali metal or alkaline earth metal oxide or hydroxide is used in an amount such that the atom ratio Si:alkali metal or alkaline earth metal is in the range from 20:1 to 7:1.

2. Coating composition according to Claim 1, **characterized in that** the component having anti-adhesive properties is graphite and the metal carbide is silicon carbide.

3. Process for coating metallic or vitreous surfaces with a vitreous layer, **characterized in that** a coating composition comprising at least one silicate, at least one component having anti-adhesive properties, selected from the group of graphite, graphite compounds and metal sulfides, and at least one metal carbide, is applied to the metallic or vitreous surface and the resulting coating is thermally compressed to give a vitreous layer, wherein the silicate is obtainable by a process comprising the hydrolysis and polycondensation of one or more silanes of the general formula (I)
RₙSiX₄₋ₙ
where the groups X are the same or different hydrolysable groups or hydroxyl groups, the radicals R are the same or different from one another and are hydrogen, alkyl, alkenyl and alkynyl groups having up to 12 carbon atoms and aryl, aralkyl and alkaryl groups having 6 to 10 carbon atoms and n is 0, 1 or 2, with the proviso that at least one silane where n = 1 or 2 is used, or oligomers derived therefrom, in the presence of
a) at least one compound from the group of the oxides and hydroxides of the alkali metals and alkaline earth metals and optionally
b) added nanoscale SiO₂ particles,
in which the at least one compound from the group of the oxides and hydroxides of the alkali metals and alkaline earth metals comprises at least one oxide or hydroxide of Li, Na, K, Mg, Ca and/or Ba, in which the alkali metal or alkaline earth metal oxide or hydroxide is used in an amount such that the atom ratio Si:alkali metal or alkaline earth metal is in the range from 20:1 to 7:1.

4. Process according to Claim 3, **characterized in that** the average of n in the starting silanes of the general formula (I) is 0.2 to 1.5.

5. Process according to either of Claims 3 and 4, **characterized in that** X is alkoxy in the starting silanes of the general formula (I).

6. Process according to any of Claims 3 to 5, **characterized in that** R is C₁₋₄ alkyl.

7. Process according to any of Claims 3 to 6, **characterized in that** the starting silanes of the general formula (I) used are (m)ethyltri(m)ethoxysilane and tetra(m)ethoxysilane in combination.

8. Process according to any of Claims 3 to 7, **characterized in that** the component having anti-adhesive properties is graphite and the metal carbide is silicon carbide.

9. Article composed of metal and/or glass, **characterized in that** said article has a coating of a coating composition according to either of Claims 1 or 2.

10. Use of a coating composition according to either of Claims 1 or 2 for coating metal or glass substrates.

11. Use according to Claim 10 as soil-repelling, friction-reducing, scratch resistant and/or abrasion resistant coating.

## Revendications

1. Composition de revêtement, en particulier pour le revêtement de surfaces métalliques ou vitreuses, contenant au moins un silicate, au moins un composant doté de propriétés antiadhésives, choisi dans le groupe composé du graphite, de composés du graphite et de sulfures métalliques, et au moins un carbure métallique, le silicate pouvant être obtenu par un procédé comprenant l'hydrolyse et la polycondensation d'un ou plusieurs silanes de formule générale (I)
**RₙSiX₄₋ₙ**
dans laquelle le groupe X, identiques ou différents les uns des autres, sont des groupes hydrolysables ou des groupes hydroxyle, les radicaux R, identiques ou différents l'un de l'autre, représentant hydrogène, des groupes alkyle, alcényle et alcynyle comportant jusqu'à 12 atomes de carbone et des groupes aryle, aralkyle et alkaryle comportant 6 à 10 atomes de carbone et n signifiant 0, 1 ou 2, à la condition qu'au moins un silane avec n = 1 ou 2 soit utilisé, ou des oligomères issus de celui-ci, en présence
a) d'au moins un composé du groupe composé par les oxydes et les hydroxydes des métaux alcalins et alcalino-terreux et éventuellement
b) de particules de SiO₂ nanométriques ajoutées, dans laquelle l'au moins un composé du groupe composé par les oxydes et les hydroxydes des métaux alcalins et alcalino-terreux comprend au moins un oxyde ou hydroxyde de Li, Na, K, Mg, Ca et/ou Ba, dans laquelle l'oxyde ou l'hydroxyde de métal alcalin ou alcalino-terreux est utilisé en une telle quantité que le rapport atomique Si : métal alcalin ou alcalino-terreux soit dans la plage de 20 : 1 à 7 : 1.

2. Composition de revêtement selon la revendication 1, **caractérisée en ce que** le composant doté de propriétés antiadhésives est le graphite et le carbure métallique est le carbure de silicium.

3. Procédé pour le revêtement de surfaces métalliques ou vitreuses avec une couche vitreuse, **caractérisé en ce qu'**on applique, sur la surface métallique ou vitreuse, une composition de revêtement qui contient au moins un silicate, au moins un composant doté de propriétés antiadhésives, choisi dans le groupe composé du graphite, de composés du graphite et de sulfures métalliques, et au moins un carbure métallique, et on densifie thermiquement le revêtement résultant en une couche vitreuse, le silicate pouvant être obtenu par un procédé comprenant l'hydrolyse et la polycondensation d'un ou plusieurs silanes de formule générale (I)
**RₙSiX₄₋ₙ**
dans laquelle le groupe X, identiques ou différents les uns des autres, sont des groupes hydrolysables ou des groupes hydroxyle, les radicaux R, identiques ou différents l'un de l'autre, représentant hydrogène, des groupes alkyle, alcényle et alcynyle comportant jusqu'à 12 atomes de carbone et des groupes aryle, aralkyle et alkaryle comportant 6 à 10 atomes de carbone et n signifiant 0, 1 ou 2, à la condition qu'au moins un silane avec n = 1 ou 2 soit utilisé, ou des oligomères issus de celui-ci, en présence
a) d'au moins un composé du groupe composé par les oxydes et les hydroxydes des métaux alcalins et alcalino-terreux et éventuellement
b) de particules de SiO₂ nanométriques ajoutées,
dans laquelle l'au moins un composé du groupe composé par les oxydes et les hydroxydes des métaux alcalins et alcalino-terreux comprend au moins un oxyde ou hydroxyde de Li, Na, K, Mg, Ca et/ou Ba,
dans laquelle l'oxyde ou l'hydroxyde de métal alcalin ou alcalino-terreux est utilisé en une telle quantité que le rapport atomique Si : métal alcalin ou alcalino-terreux soit dans la plage de 20 : 1 à 7 : 1.

4. Procédé selon la revendication 3, **caractérisé en ce que** la valeur moyenne de n dans les silanes de départ de formule générale (I) est de 0,2 à 1,5.

5. Procédé selon l'une quelconque des revendications 3 et 4, **caractérisé en ce que** dans les silanes de départ de formule générale (I), X représente alcoxy.

6. Procédé selon l'une quelconque des revendications 3 à 5, **caractérisé en ce que** R représente C₁₋₄ alkyle.

7. Procédé selon l'une quelconque des revendications 3 à 6, **caractérisé en ce qu'**en tant que silanes de départ de formule générale (I) un (m)éthyl(m)éthoxysilane et un tétra(m)éthoxysilane sont utilisés en combinaison.

8. Procédé selon l'une quelconque des revendications 3 à 7, **caractérisé en ce que** le composant doté de propriétés antiadhésives est le graphite et le carbure métallique est le carbure de silicium.

9. Objet de métal et/ou de verre, **caractérisé en ce qu'**il présente un revêtement composé d'une composition de revêtement selon l'une quelconque des revendications 1 et 2.

10. Utilisation d'une composition de revêtement selon l'une quelconque des revendications 1 et 2 pour le revêtement de substrats métalliques ou de verre.

11. Utilisation selon la revendication 10 en tant que revêtement antisalissures, réduisant le frottement, résistant aux rayures et/ou à l'abrasion.
